# FASCICULE DE BREVET EUROPEEN

(11) **EP 3 008 531 B1**
(45) Date de publication et mention de la délivrance du brevet: **31.07.2019**
(21) Numéro de dépôt: 14734875.9
(22) Date de dépôt: 06.06.2014
(51) Int. Cl.: G05B 23/02, G06F 16/23, G06F 16/22

(54) **PROCEDES DE CREATION D'UNE BASE DE DONNEES ET D'ELABORATION D'UNE CARTE D'ETATS DE FONCTIONNEMENT D'AERONEFS, ET UN PROCEDE DE SURVEILLANCE DU FONCTIONNEMENT D'UN AERONEF ASSOCIE**
VERFAHREN ZUR ERSTELLUNG EINER DATENBANK UND ZUR FORMULIERUNG EINER KARTE VON BETRIEBSZUSTÄNDEN EINES FLUGZEUGS SOWIE VERFAHREN ZUR ÜBERWACHUNG DES BETRIEBS EINES ENTSPRECHENDEN FLUGZEUGS
METHODS OF CREATING A DATABASE AND OF FORMULATING A MAP OF OPERATING STATES OF AIRCRAFT AND A METHOD OF MONITORING THE OPERATION OF AN ASSOCIATED AIRCRAFT

(30) Priorité: 10.06.2013 FR 1355313
(43) Date de publication de la demande: 20.04.2016
(73) Titulaire: Safran Aircraft Engines, 75015 Paris (FR)
(72) Inventeur: BOTHIER, Guillaume, F-77550 Moissy-Cramayel Cedex (FR); GOUBY, Aurélie, F-77550 Moissy-Cramayel Cedex (FR)
(74) Mandataire: Regimbeau
(86) Numéro de dépôt international: PCT/FR2014/051372
(87) Numéro de publication internationale: WO 2014/199057

(56) Documents cités:
- FR-A1- 2 971 595
- US-A1- 2008 091 630
- JEROME LACAILLE ET AL: "Visual mining and statistics for a turbofan engine fleet", AEROSPACE CONFERENCE, 2011 IEEE, IEEE, 5 mars 2011 (2011-03-05), pages 1-8, XP031938160, DOI: 10.1109/AERO.2011.5747578 ISBN: 978-1-4244-7350-2
- JEROME LACAILLE: "Validation of health-monitoring algorithms for civil aircraft engines", AEROSPACE CONFERENCE, 2010 IEEE, IEEE, PISCATAWAY, NJ, USA, 6 mars 2010 (2010-03-06), pages 1-11, XP031657181, ISBN: 978-1-4244-3887-7

## Description

### DOMAINE DE L'INVENTION

L'invention concerne de manière générale le domaine de la surveillance de l'état de fonctionnement d'un aéronef.

L'invention concerne un procédé de création d'une base de données d'états de fonctionnement d'aéronefs, un procédé d'élaboration d'une carte desdits états de fonctionnement, et un procédé de surveillance du fonctionnement d'un aéronef à partir d'une telle carte.

### ETAT DE LA TECHNIQUE

Dans le domaine de l'aéronautique, il est important de pouvoir surveiller l'état de fonctionnement d'un aéronef afin de prévoir et planifier des opérations de maintenance sur celui-ci. L'état de fonctionnement d'un aéronef peut en effet évoluer au cours du temps et une surveillance adaptée peut permettre de détecter des anomalies de fonctionnement, surveiller une dégradation et planifier à l'avance d'éventuelles opérations de maintenance. Cela permet notamment d'éviter des retards, d'effectuer des réparations avant que la dégradation ne soit trop importante, de regrouper des opérations de réparation entre elles, etc...

Des outils de surveillance ont été mis au point afin d'identifier les anomalies altérant le fonctionnement d'un système d'un aéronef, par exemple son moteur, à partir de mesures décrivant l'état de ce système.

Les documents FR2939924 et FR2942001 décrivent des procédés permettant de mesurer les paramètres de fonctionnement d'un moteur à surveiller, de calculer des indicateurs représentatifs de l'état de fonctionnement du moteur, et d'identifier des anomalies de fonctionnement du moteur à partir desdits indicateurs. L'identification des anomalies de fonctionnement fait appel à l'intervention d'experts du comportement des moteurs, afin de définir des indicateurs de référence décrivant de manière caricaturale des défaillances connues.

Le document FR2972025 décrit un procédé de prévision d'opérations de maintenance sur un moteur d'aéronef permettant de sélectionner un modèle de défaillance pertinent parmi un ensemble de modèles de défaillance, en fonction de l'âge du moteur au moment de la défaillance, et d'associer au modèle de défaillance sélectionné des règles de décision d'intervention en fonction d'un ensemble de paramètres concernant l'âge du moteur ainsi que les contraintes de reconstruction.

Le document FR2971595 décrit un procédé de surveillance d'un moteur consistant à recueillir au cours du temps des mesures sur des variables relatives à un moteur à surveiller, déterminer à partir des mesures un point d'entrée représentant un état du moteur et projeter le point d'entrée sur une carte d'états construite lors d'une phase préalable d'apprentissage à partir d'un jeu de données d'apprentissage.

La carte d'états est une carte comprenant un ensemble de cellules. Cette carte peut être construite selon une technique de compression déterminée du type technique de cartographie autoadaptative de Kohonen à partir de données d'apprentissage issues de mesures réalisées sur une flotte de moteur.

Une fois la carte établie, différentes zones d'intérêt de celle-ci sont identifiées par des experts comme correspondant à différents états de fonctionnement ou de dégradation. Par exemple, le coin inférieur droit de la carte peut indiquer une augmentation de la température des gaz d'échappement révélant un phénomène naturel d'usure du moteur.

Les mesures des variables relatives au fonctionnement du moteur à surveiller sont acquises à chaque vol en différents instants prédéterminés et sont utilisées pour calculer une série de paramètres du moteur pour chacun de ces instants. Chaque série de paramètres est projetée sur la carte de manière à former une trajectoire. Cette trajectoire est comparée avec des trajectoires suivies dans le passé par d'autres moteurs et stockées précédemment dans une base de données afin d'identifier des trajectoires similaires à celle suivie par le moteur à surveiller. Une analyse statistique de ces trajectoires et des zones de la carte traversées par celles-ci permet de diagnostiquer ou de prédire d'éventuelles défaillances et d'anticiper des opérations de maintenance sur le moteur à surveiller.

Un inconvénient de ce procédé est qu'il fait appel à l'intervention d'experts pour identifier sur la carte les zones d'intérêt.

La prise en compte de nouvelles défaillances ou de nouveaux états de fonctionnement peut nécessiter de construire une nouvelle carte.

Or l'ajout de nouvelles données d'apprentissage peut conduire à une nouvelle carte totalement différente de la carte initiale. Par exemple, une zone qui était symptomatique de dégradation dans la carte initiale peut être devenue une zone saine dans la nouvelle carte. De nouvelles zones d'intérêt peuvent apparaître, qui n'étaient pas présentes dans la carte initiale. Cela a pour conséquence qu'il est utile de faire intervenir à nouveau un expert pour identifier sur la nouvelle carte les zones d'intérêt.

La prise en compte de nouvelles défaillances ou de nouveaux états de fonctionnement est donc un processus long et couteux.

### RESUME DE L'INVENTION

Un but de l'invention est de proposer un outil permettant une surveillance automatisée de l'état de fonctionnement d'un aéronef.

La présente invention se rapporte ainsi selon un premier aspect à un procédé de surveillance du fonctionnement d'un aéronef,
à partir d'une carte d'états de fonctionnement d'aéronefs,
ladite carte d'états de fonctionnement étant réalisée à partir d'un fond de carte établi à partir d'une base de données d'états de fonctionnement d'une flotte d'aéronefs stockant des séries de paramètres,
chaque série de paramètres comprenant des paramètres caractérisant un état de fonctionnement d'un desdits aéronefs et éventuellement au moins une information de dégradation indicative d'un niveau de dégradation de l'aéronef,
ledit fond de carte comprenant un ensemble de cellules chacune décrite par un vecteur-code proche d'une ou plusieurs séries de paramètres stockées dans ladite base de données,
à au moins une desdites cellules étant attribuée au moins un taux de dégradation relatif à une information de dégradation, correspondant à la proportion des séries de paramètres comprenant ladite information de dégradation parmi les séries de paramètres proches du vecteur-code de ladite cellule,
dans lequel un calculateur exécute les étapes de :
   - déterminer une série de paramètres caractérisant un état de fonctionnement de l'aéronef à surveiller, à partir de données mesurées sur l'aéronef à surveiller,
   - projeter la série de paramètres déterminés dans une cellule, dite cellule cible, de la carte d'états de fonctionnement d'aéronefs, et
   - acquérir ledit au moins un taux de dégradation attribué à ladite cellule cible.

Selon d'autres caractéristiques avantageuses et non limitatives :
- les séries de paramètres comprennent des paramètres obtenus à partir de mesures réalisées sur des aéronefs réels ayant un niveau de dégradation identifié.
- les séries de paramètres comprennent des paramètres obtenus à partir d'un modèle simulant un fonctionnement d'un aéronef ayant un niveau de dégradation prédéfini.
- chaque série de paramètres comprend des paramètres déterminés à partir de mesures parmi une température de gaz d'échappement, un débit de carburant, une vitesse de rotation d'un arbre basse pression, une vitesse de rotation d'un arbre haute pression, et des températures et pressions en différents points d'un moteur de l'aéronef.

- chaque série de paramètres comprend une information de dégradation indiquant si l'état de fonctionnement est « normal » ou « dégradé ».
- chaque série de paramètres comprend une information de dégradation indiquant une localisation d'une dégradation dans l'aéronef.

Le fond de carte peut être établi à partir de la base de données d'états de fonctionnement selon la technique de cartographie auto-adaptative de Kohonen.

Ladite carte d'états de fonctionnement peut comprendre en outre des classes de cellules regroupant des cellules de la carte, les classes étant définies en fonction d'une distance entre cellules et/ou des informations de dégradation comprises dans les séries de paramètres proches des vecteurs-code de cellules de la carte.

De plus, chaque classe peut regrouper un ensemble de cellules adjacentes, ledit ensemble de cellules étant l'intersection d'une union de classes candidates, créées en fonction des distances entre cellules, avec un ensemble de cellules adjacentes présentant chacune un taux de dégradation relatif à une même information de dégradation supérieur à un seuil déterminé.

Par ailleurs, un label peut être attribué à une classe en fonction des informations de dégradation comprises dans les séries de paramètres proches des vecteurs-code des cellules de ladite classe.

Dans un mode de mise en oeuvre du procédé selon le premier aspect, le calculateur exécute l'étape de :
- établir un diagnostic d'une dégradation de l'aéronef à surveiller en fonction du label d'au moins une classe à laquelle appartient ladite cellule cible et en variante en fonction dudit au moins un taux de dégradation acquis pour ladite cellule cible.

Dans un mode de mise en oeuvre du procédé selon le premier aspect, le calculateur exécute l'étape de :
- établir un pronostic d'une défaillance de l'aéronef à surveiller en fonction d'une évolution dudit au moins un taux de dégradation acquis au cours du temps.

Dans un mode de mise en oeuvre du procédé selon le premier aspect, le calculateur exécute en outre l'étape de :
- mettre à jour les données enregistrées dans la base de données en ajoutant une série de paramètres comprenant les paramètres caractérisant l'état de fonctionnement de l'aéronef à surveiller et une information de dégradation indicative de la dégradation diagnostiquée.

Dans un mode de mise en oeuvre du procédé selon le premier aspect, le calculateur exécute en outre l'étape de :
- élaborer à nouveau la carte d'états de fonctionnement à partir des données mises à jour.

Selon un deuxième aspect, l'invention concerne un système de surveillance du fonctionnement d'un aéronef caractérisé en ce qu'il comprend un calculateur programmé pour mettre en oeuvre les étapes du procédé selon le premier aspect.

### PRESENTATION DES DESSINS

D'autres caractéristiques et avantages ressortiront encore de la description qui suit, laquelle est purement illustrative et non limitative et peut être lue en regard des figures annexées, parmi lesquelles :
- la figure 1 représente de manière schématique un exemple de carte en deux dimensions d'états de fonctionnement d'aéronefs,
- la figure 2 représente de manière schématique les moyens matériels mis en oeuvre dans le cadre de l'invention,
- la figure 3 est un ordinogramme illustrant des étapes de création d'une base de données d'états de fonctionnements d'aéronefs selon un mode de réalisation de l'invention,
- la figure 4 est un ordinogramme illustrant des étapes du procédé d'élaboration d'une carte d'états de fonctionnements d'aéronefs selon un mode de réalisation de l'invention,
- les figures 5a à 5d représentent de manière schématique des exemples de cartes sur lesquelles des classes sont définies selon le procédé d'élaboration d'une carte d'états de fonctionnements d'aéronefs selon un mode de réalisation de l'invention,
- la figure 6 est un ordinogramme illustrant des étapes d'un procédé de surveillance de l'état d'un aéronef conforme à un mode de réalisation de l'invention,
- les figures 7a et 7b représentent des diagrammes de taux de dégradation permettant d'établir un pronostic d'une défaillance d'un aéronef à surveiller selon le procédé de surveillance de l'état d'un aéronef conforme à un mode de réalisation de l'invention,
- la figure 8 représente de manière schématique un exemple de carte d'états de fonctionnements sur laquelle est représentée une évolution de la position d'un aéronef à surveiller permettant d'établir un pronostic d'une défaillance dudit aéronef selon le procédé de surveillance de l'état d'un aéronef conforme à un mode de réalisation de l'invention.

### DESCRIPTION DETAILLEE D'UN MODE DE REALISATION

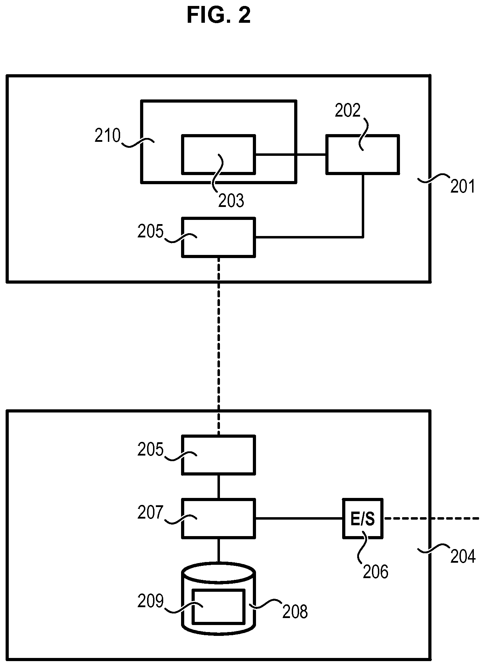

La figure 2 représente les moyens matériels mis en oeuvre dans le cadre de l'invention.

Au cours de chaque vol, un aéronef 201 enregistre des données concernant d'une part le fonctionnement de ses différents systèmes (appelées « données système »), tels que son moteur 210, ses calculateurs, son système hydraulique, son système électrique, etc... et des données concernant d'autre part l'environnement dans lequel l'aéronef 210 évolue (appelées « données d'environnement »). Les données d'environnement permettent notamment de savoir si les systèmes de l'aéronef fonctionnent dans un état nominal ou non. Ces données système et d'environnement permettent de contrôler et de surveiller le fonctionnement des systèmes de l'aéronef.

Les données sont enregistrées par des calculateurs embarqués 202 (par exemple FADEC, ACMS etc.) à partir de mesures obtenues par le biais de capteurs 203 intégrés à l'aéronef 201.

A titre illustratif, les données système concernant un moteur de l'aéronef sont mesurées par des capteurs intégrés au moteur et enregistrées par le FADEC contrôlant le moteur. A titre d'exemple, les données moteur mesurées comprennent la température des gaz d'échappement, le débit de carburant, la vitesse de rotation de l'arbre basse pression, la vitesse de rotation de l'arbre haute pression, les températures et pressions en différents points du moteur, etc.

Les données d'environnement mesurées peuvent comprendre l'altitude de l'aéronef, la température extérieure, la position de la vanne de décharge VBV, la consigne de la turbine basse pression, les niveaux de prélèvements d'air dans les compresseurs, la vitesse de l'aéronef (en Mach), etc.

L'aéronef 201 transmet régulièrement à une station au sol 204 des messages contenant les données enregistrées par les calculateurs embarqués 202, ainsi que des dates d'acquisition des données et des identifiants permettant d'identifier les systèmes et l'aéronef concernés. Usuellement, les données transmises par les calculateurs concernent des valeurs de paramètres mesurées lors de phases prédéterminées de chaque vol, typiquement lors de la phase de décollage et lors d'une phase de vol à haute altitude. Les données sont transmises dans des messages (snapshots) envoyés via une interface de communication 205 entre l'aéronef et la station au sol. L'interface de communication 205 peut mettre en oeuvre un protocole parmi les protocoles ACARS, PCMCIA, 3G etc.

La station au sol 204 comporte de manière habituelle une interface entrée-sortie 206, des moyens de traitement 207 sous la forme d'un calculateur, et des moyens de stockage 208 sous la forme d'une base de données.

La station au sol 204 reçoit les messages émis à différentes dates par différents aéronefs et pour différents systèmes. Les données contenues dans les messages sont stockées dans la base de données 208.

Le calculateur est programmé pour traiter les données afin d'élaborer une carte d'états de fonctionnement d'aéronefs et de surveiller l'état de fonctionnement des aéronefs.

A cet effet, le calculateur détermine un ensemble de paramètres de fonctionnement de l'aéronef à partir des données transmises par l'aéronef.

Plus précisément, le calculateur corrige les données système à l'aide des données d'environnement associées.

Cette correction permet notamment de supprimer l'influence de l'environnement sur les données système mesurées de façon à supprimer l'influence des conditions extérieures, et à ce que les données système corrigées ne dépendent plus que de l'état du système.

D'autres traitements peuvent être réalisés, par exemple pour atténuer le bruit. Les données système corrigées obtenues par les moyens de traitement servent à constituer un ensemble de paramètres 209 stocké dans la base de données 208 de la station au sol 204.

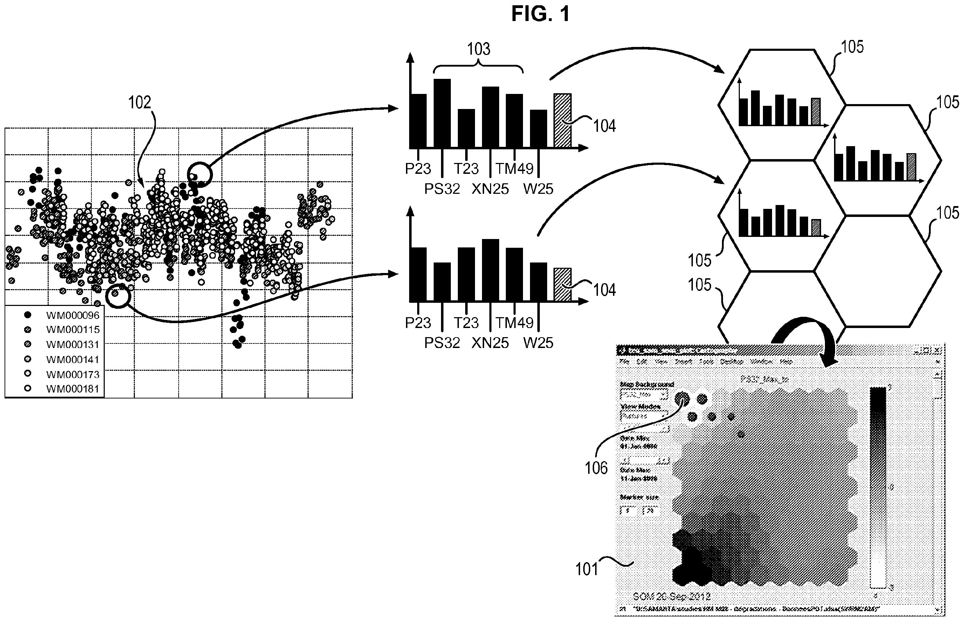

La surveillance de l'état de fonctionnement d'un aéronef est réalisée à l'aide d'une carte 101 en deux dimensions, telle que celle qui est illustrée sur la figure 1, représentant un ensemble d'états de fonctionnement d'aéronef. Une telle carte peut concerner uniquement l'état de fonctionnement d'un seul système d'un aéronef, tel que son moteur, ou bien représenter un ensemble d'états de fonctionnement d'un aéronef dans sa globalité. La carte 101 est établie à partir d'une base de données telle que la base de données 208. La base de données et la carte sont construites d'une manière spécifique à l'invention au cours de la mise en oeuvre des procédés selon l'invention.

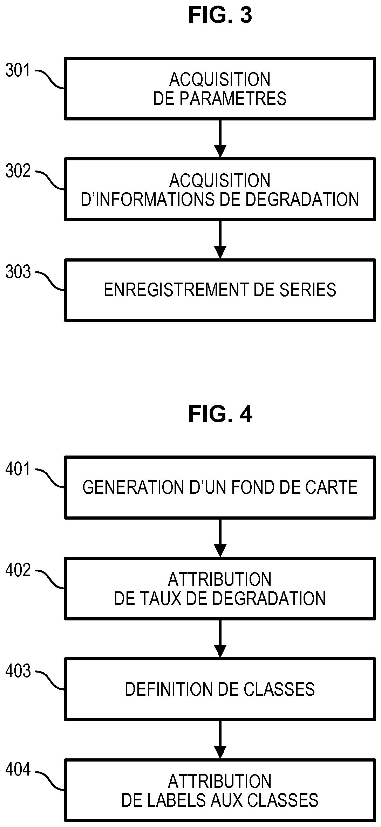

La figure 3 représente un ordinogramme illustrant des étapes de création d'une base de données d'états de fonctionnements d'aéronefs.

Selon une première étape 301, des paramètres caractérisant un état de fonctionnement d'un ensemble d'aéronefs de la même catégorie que l'aéronef à surveiller sont acquis par les calculateurs 202 ou 207.

Selon une première variante lesdits paramètres sont obtenus à partir de données comprenant des données système qui ont été mesurées par des capteurs 203 intégrés à un aéronef et des données d'environnement concernant l'environnement dans lequel cet aéronef fonctionne. Ces paramètres sont associés à une date d'acquisition des données et à des identifiants permettant d'identifier le système et l'aéronef concerné.

Les données système comprennent par exemple la température des gaz d'échappement, le débit de carburant, la vitesse de rotation des arbres d'un moteur, les températures et pressions en différents points du moteur.

Les données d'environnement peuvent comprendre l'altitude de l'aéronef, la température extérieure, la position de la vanne de décharge VBV, la consigne de la turbine basse pression, les niveaux de prélèvements d'air dans les compresseurs, la vitesse de l'aéronef (en Mach), etc.

Lesdites données système et d'environnement, mesurées par des capteurs 203, sont acquises par le calculateur embarqué 202 ou bien transférées par celui-ci au calculateur 207 de la station au sol 204. Une telle acquisition peut être réalisée en vol, au sol, en atelier, etc...

Les paramètres caractérisant un état de fonctionnement peuvent notamment être acquis en supprimant l'influence de l'environnement sur les données système mesurées. Un tel calcul peut être réalisé par les calculateurs 202 ou 207.

Selon une seconde variante, un modèle numérique d'aéronef ou d'un ou plusieurs systèmes d'un aéronef peut être utilisé pour acquérir, par simulation, des paramètres caractérisant un état de fonctionnement d'un aéronef ou d'un système pour un niveau de dégradation prédéfini. Une telle simulation peut avantageusement être réalisée par le calculateur 207.

L'utilisation d'un modèle numérique permet de simuler des dégradations d'un aéronef ou d'un de ses systèmes non observées sur des aéronefs réels et donc d'obtenir un ensemble de données plus complet, couvrant davantage d'états de fonctionnement et de dégradation possibles, et en conséquence de limiter le besoin de mise à jour de la carte d'états de fonctionnement établie à partir de cette base de données.

Selon une deuxième étape 302, une information de dégradation (référencée 104 sur la figure 1) est acquise pour au moins un desdits aéronef. L'information de dégradation est indicative du niveau de dégradation de l'aéronef ou d'un de ses systèmes pour lequel les paramètres de fonctionnement ont été calculés. L'information de dégradation peut également indiquer le système concerné par cette dégradation.

Dans le cas d'un aéronef réel, l'information de dégradation peut provenir de l'analyse menée lors d'une opération de maintenance des défaillances présentées par l'aéronef.

Dans le cas de paramètres obtenus à partir d'un modèle numérique, l'information de dégradation correspond au niveau de dégradation ayant été utilisé pour simuler le fonctionnement de l'aéronef ou de ses systèmes et calculer les paramètres.

L'information de dégradation peut caractériser de manière plus ou moins fine l'état de fonctionnement de l'aéronef ou de ses systèmes. L'information peut dépendre du type de carte souhaité et du niveau de précision du diagnostic de défaillance souhaité.

L'information de dégradation peut par exemple prendre deux valeurs, à savoir une première valeur indicative d'un état de fonctionnement « normal » et une deuxième valeur indicative d'un état de fonctionnement « dégradé ».

Si un niveau de précision plus élevé est requis, l'information de dégradation peut également indiquer une localisation d'une dégradation dans l'aéronef. Par exemple, l'information de dégradation peut caractériser une dégradation du compresseur HP.

Une dégradation décrite trop précisément est plus contraignante car elle aura moins de chance de se reproduire et le nombre d'informations de dégradation différentes présentes dans la base de données à prendre en compte pour la création de la carte sera donc multiplié. En revanche, l'utilisation d'une information de dégradation plus précise permet une interprétation de la carte plus fine.

Selon une troisième étape 303, des séries de paramètres comprenant chacune des paramètres caractérisant un état de fonctionnement d'un aéronef dans sa globalité ou d'un système d'un aéronef acquis à l'étape 301 et le cas échéant une information de dégradation acquise à l'étape 302 sont enregistrées par le calculateur 207 dans la base de données 208.

Avantageusement, chaque série de paramètres peut comprendre plusieurs informations de dégradation indicatives d'un niveau de dégradation. Lors de l'élaboration de la carte d'états de fonctionnement à partir des séries de paramètres de la base de données, le type d'information de dégradation désiré peut être choisi en sélectionnant l'information de dégradation ayant la précision requise.

Selon une variante, les étapes 301 à 303 peuvent être mises en oeuvre de manière répétée pour plusieurs aéronefs ou systèmes d'aéronefs, la mise en oeuvre de ces étapes pour un aéronef ou un système étant indépendante de la mise en oeuvre d'étapes similaires pour un autre aéronef ou même un autre système du même aéronef.

La base de données contient ainsi une pluralité de séries de paramètres obtenues à partir de mesures recueillies au cours du temps ou par simulation, concernant différents aéronefs et différents systèmes. Ces séries de paramètres sont associées à des dates d'acquisition ou dates de vol, ainsi qu'à des identifiants permettant d'identifier les systèmes et aéronefs concernés.

L'ensemble de données obtenu pour les aéronefs dans leur globalité ou pour un système particulier 102 est représenté sur la figure 1 par un ensemble de points, chaque point étant défini par une série de paramètres 103 calculés ou mesurés pour un aéronef donné, pour un vol donné, et éventuellement pour un système donné.

La figure 4 est un ordinogramme illustrant des étapes d'un procédé d'élaboration d'une carte des états de fonctionnements conforme à un mode de mise en oeuvre de l'invention.

Le calculateur 207 élabore la carte 101 à partir de l'ensemble de données enregistrées dans la base de données 209 qui a été constituée. Une telle carte peut représenter des états de fonctionnement d'aéronefs dans leur globalité ou bien uniquement des états de fonctionnement d'un système particulier, tel qu'un des moteurs d'aéronef.

Selon une première étape 401, un fond de carte des états de fonctionnement est réalisé. Un tel fond de carte consiste en une grille comprenant un nombre prédéterminé de cellules (référencées 105 sur la figure 1). Chaque cellule est caractérisée par une position sur le fond de carte et un vecteur de valeurs appelé vecteur-code. Les vecteurs-codes des cellules sont adaptés afin d'être proches des séries de paramètres 103 stockées dans la base de données

Chaque cellule peut ainsi être rapprochée, dans l'espace multidimensionnel des séries de paramètres, d'une ou plusieurs séries de paramètres similaires. Chacune de ces séries peut comprendre une information de dégradation.

Les cellules de la carte peuvent ainsi être rapprochées des séries de paramètres stockées dans la base de données selon la technique de cartographie ou projection auto-adaptative de Kohonen.

Une telle technique modifie les vecteurs-codes des cellules du fond de carte de manière à ajuster le plus finement possible, dans l'espace multidimensionnel des séries de paramètres, le maillage de cellules à une nappe sur laquelle se situent les séries de paramètres stockées dans la base de données. La technique de projection de Kohonen permet alors de regrouper sur la carte les séries de paramètres correspondant à des états de fonctionnement identiques ou proches, créant ainsi sur la carte des zones correspondant à de tels états de fonctionnement. La cartographie de Kohonen est ainsi particulièrement adaptée pour analyser la répartition de données dans un espace multidimensionnel de grande dimension comme l'espace des états de fonctionnement d'un aéronef.

Selon un mode de réalisation, le calculateur 207 attribue à au moins une cellule de la carte au moins un taux de dégradation lors d'une étape 402. Ce taux de dégradation est relatif à une information de dégradation et correspond à la proportion des séries de paramètres comprenant ladite information de dégradation parmi l'ensemble des séries de paramètres proches du vecteur-code de cette cellule. Si des séries de paramètres comprenant différentes informations de dégradation sont proches du vecteur-code d'une cellule, il est possible de définir pour cette cellule un taux de dégradation pour chacune de ces informations de dégradation. Pour un nombre statistiquement significatif de séries de paramètres proches du vecteur-code d'une cellule donnée comprenant une information de dégradation, le taux de dégradation relatif à une information de dégradation pour cette cellule représente donc la probabilité minimale qu'un système ou un aéronef présentant un état de fonctionnement similaire à celui des séries de paramètres proches du vecteur-code de la cellule soit affecté par ladite dégradation.

Selon une variante, l'adaptation des vecteurs-code des différentes cellules de la carte aux séries de paramètres est également fonction des informations de dégradation desdites séries de paramètres.

La technique de projection de Kohonen permet alors de regrouper sur la carte les cellules dont les vecteurs-code sont proches des séries de paramètres contenant des informations de dégradation identiques ou proches, créant ainsi sur la carte des zones correspondant à des dégradations identiques ou proches. Ceci permet de garantir que les regroupements d'états de fonctionnement sur la carte correspondent à des niveaux de dégradation que l'on cherche à identifier.

Selon une étape 403, le calculateur définit des classes de cellules regroupant des cellules de la carte 101, les classes étant définies en fonction des distances entre les cellules de la carte et/ou des informations de dégradation comprises dans les séries de paramètres proches des vecteurs-code de cellules de la carte. De telles classes permettent de définir automatiquement et précisément des zones d'intérêt de la carte correspondant à un état de fonctionnement ou de dégradation, sans l'intervention d'un expert.

Les classes définies peuvent êtres disjointes ou se recouper.

Les classes peuvent également ne contenir que des cellules dont les vecteurs-code sont proches de séries de paramètres comprenant une information de dégradation ou bien que des cellules dont les vecteurs-code sont proches de séries de paramètres ne comprenant aucune information de dégradation.

Pour faciliter l'interprétation de la carte, la carte peut être affichée sur un écran avec chaque cellule de la carte représentée avec une couleur donnée en fonction de la classe à laquelle la cellule appartient. Les cellules d'une même classe peuvent être affichées avec une même couleur.

Dans un mode de réalisation, selon une étape 404, le calculateur 207 attribue un label à au moins une des classes définies à l'étape 403, en fonction des informations de dégradation comprises dans des séries de paramètres proches des vecteurs-code des cellules regroupées dans cette classe.

Le label d'une classe permet ainsi de caractériser de manière automatique l'état de fonctionnement ou de dégradation associé à la zone de la carte couverte par cette classe, sans l'intervention d'un expert.

Dans une variante, les classes auxquelles n'a pas été attribué un label peuvent laisser apparaitre un champ modifiable par l'utilisateur.

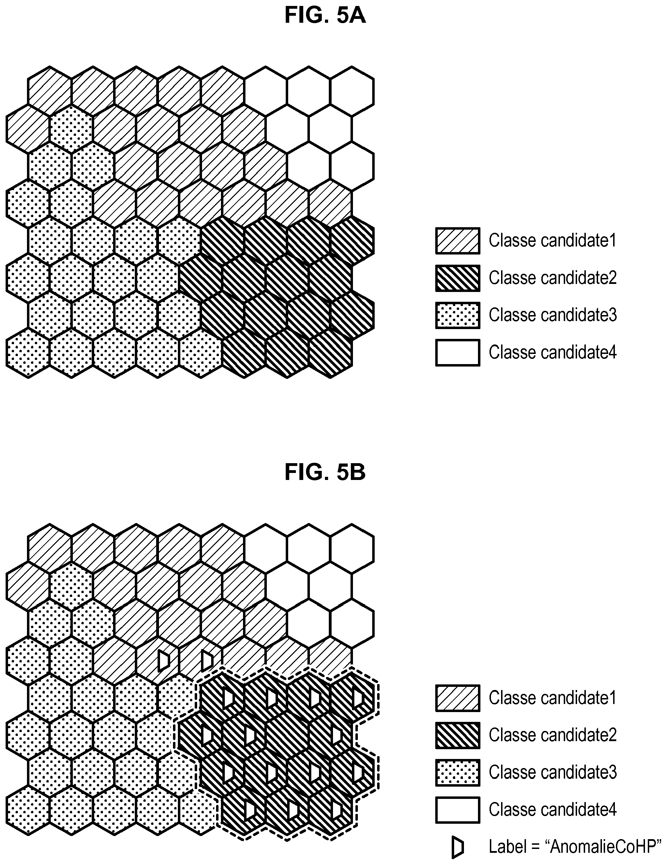

Selon un premier mode de réalisation, le calculateur 207 regroupe les cellules en différentes classes en fonction des vecteurs-codes attribués à ces cellules. Plus précisément, le calculateur regroupe les cellules de la carte en classes de cellules, en fonction de la distance entre cellules définie comme la norme de l'écart entre les vecteurs-codes attribués aux cellules. Cette distance peut par exemple être une distance euclidienne ou une distance de Mahalanobis. Avantageusement, le calculateur calcule les distances entre les cellules de la carte, classe ces distances de manière hiérarchique ou par la méthode des k-means et crée des classes candidates regroupant des cellules de la carte en fonction de ces distances, comme représenté en Figure 5a.

Selon une première variante, le calculateur regroupe les cellules de la carte en un nombre prédéfini de classes dites classes candidates de façon à minimiser dans chaque classe la distance maximale entre les cellules de la classe candidate.

Selon une autre variante, le nombre de classes candidates n'est pas imposé et le calculateur regroupe dans une classe candidate toutes les cellules présentant entre elles une distance inférieure à une distance seuil prédéterminée.

Pour chaque classe candidate, une classe dépourvue de label est ensuite créée, laissant la possibilité à un utilisateur d'attribuer manuellement ultérieurement un label à ces classes.

Selon une variante pour de telles classes, le calculateur attribue un label n'indiquant pas une dégradation, par exemple un label « Classe sans label 1 ».

Selon un deuxième mode de réalisation, représenté en Figure 5b, le calculateur détermine des classes candidates comme décrit ci-dessus puis détermine ensuite pour chaque classe candidate ou union de classes candidates s'il existe une intersection entre celle-ci et un ensemble de cellules adjacentes de la carte présentant un taux de dégradation associé à une même information de dégradation supérieur à un seuil prédéterminé.

Si une telle intersection existe, une classe regroupant les cellules de cette intersection est créée et un label correspondant à cette information de dégradation, alors appelée information de dégradation de la classe, est associé automatiquement à la classe par le calculateur 207.

Selon une variante, la classe créée peut comprendre des cellules appartenant à une classe candidate mais ayant un taux de dégradation associé à l'information de dégradation de la classe inférieur au seuil prédéterminé si elles sont entourées de cellules appartenant à la classe candidate et présentant un taux de dégradation supérieur au seuil prédéterminé.

Selon une autre variante, également représentée en Figure 5b, la classe créée peut comprendre des cellules appartenant à une classe candidate mais dont les vecteurs-code sont proches de séries de paramètres ne comprenant pas l'information de dégradation de la classe si elles sont entourées de cellules appartenant à la classe candidate et dont les vecteurs-code sont proches de séries de paramètres comprenant l'information de dégradation de la classe.

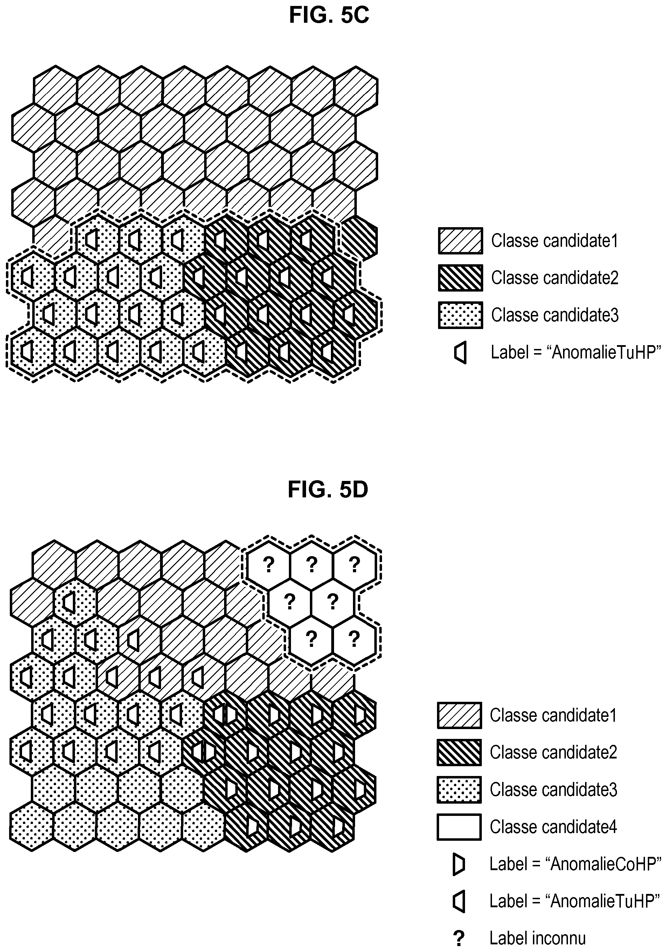

Selon un mode de réalisation, représenté en Figure 5c, la classe créée peut regrouper des cellules appartenant à plusieurs classes candidates si ces classes candidates comprennent des cellules présentant un taux de dégradation associé à une même information de dégradation supérieur à un seuil prédéterminé.

En variante, représentée en Figure 5d, si une classe candidate ne possède aucune intersection avec un ensemble de cellules dont les vecteurs-code sont proches de séries de paramètres comprenant des informations de dégradation, c'est-à-dire si une classe candidate ne regroupe que des cellules dont les vecteurs-code sont proches de séries de paramètres sans information de dégradation, une classe peut être créée et un label du type « classe sans label » peut lui être attribué. Un opérateur pourra ensuite attribuer manuellement ultérieurement un label à ces classes.

Selon un troisième mode de réalisation, les classes sont définies uniquement en fonction des informations de dégradation des séries de paramètres proches des vecteurs-code des cellules. Si un ensemble de cellules présentent un taux de dégradation associé à une même information de dégradation supérieur à un seuil prédéterminé, une classe est définie. Un label correspondant à cette information de dégradation, dite information de dégradation de la classe, est associé automatiquement à la classe par le calculateur 207.

Dans ce troisième mode de réalisation, selon une variante, la classe créée peut comprendre des cellules présentant un taux de dégradation associé à l'information de dégradation de la classe inférieur au seuil prédéterminé si ces cellules sont entourées par des cellules présentant un taux de dégradation associé à l'information de dégradation de la classe supérieur au seuil prédéterminé. Selon une autre variante, la classe créée peut regrouper des cellules dont les vecteurs-code sont proches de séries de paramètres ne comprenant pas l'informations de dégradation de la classe si celles-ci sont entourées par des cellules dont les vecteurs-code sont proches de séries de paramètres comprenant l'information de dégradation de la classe et présentant un taux de dégradation associé supérieur à un seuil prédéterminé.

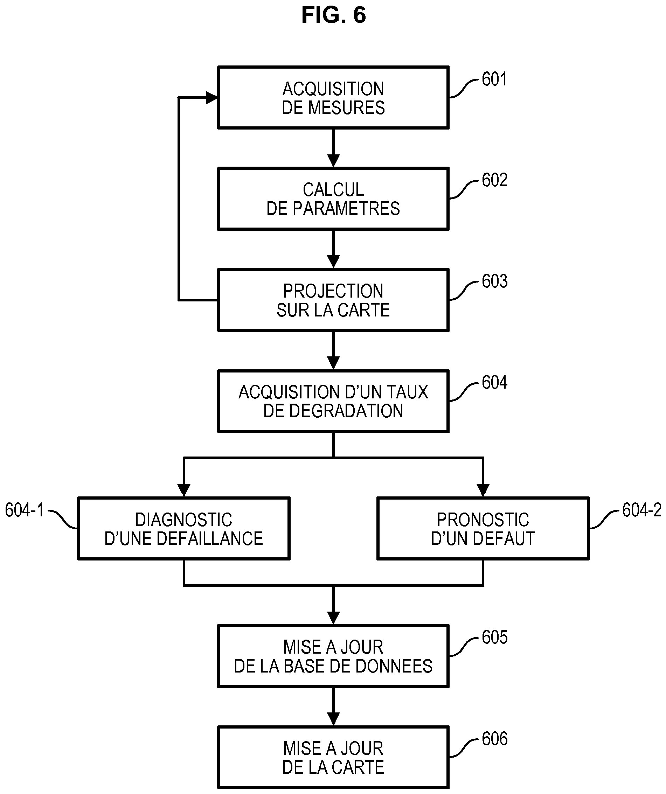

La Figure 6 est un ordinogramme illustrant des étapes du procédé de surveillance de l'état de fonctionnement d'un aéronef conforme à un mode de mise en oeuvre de l'invention à partir d'une carte élaborée selon les étapes 401 à 404 de la Figure 4.

Le calculateur 202 ou 207 est programmé pour exécuter les étapes suivantes.

Selon une première étape 601, la station au sol reçoit une série de données relatives au fonctionnement de l'aéronef à surveiller. Ces données sont de même type que celles qui ont été acquises lors de l'étape 301 de la figure 3. La série de données reçue comprend des données système qui ont été mesurées par des capteurs intégrés à l'aéronef à surveiller, des données d'environnement concernant l'environnement dans lequel l'aéronef fonctionne, une date d'acquisition des données et des identifiants permettant d'identifier le système et l'aéronef concerné.

Selon une deuxième étape 602, le calculateur calcule des paramètres caractérisant l'état de fonctionnement de l'aéronef à partir de la série de données reçues à l'étape précédente, notamment en supprimant l'influence de l'environnement sur les données système mesurées.

Selon une troisième étape 603, les paramètres obtenus pour l'aéronef dans sa globalité ou pour un de ses systèmes sont projetés sur la carte d'états de fonctionnement élaborée précédemment avec le procédé de la figure 4. Cette étape de projection peut être réalisée en utilisant la technique de Kohonen ou toute autre technique de projection. Un point image reflétant la position de la série de paramètres obtenue par rapport aux séries de paramètres utilisées pour établir le fond de carte est alors formé sur la carte.

Les étapes 601 à 603 peuvent être mises en oeuvre de façon répétée de façon à projeter sur la carte plusieurs séries de paramètres correspondant à des états de fonctionnement à différents instants de la vie de l'aéronef. Cela permet de visualiser sur la carte l'évolution de l'aéronef ou d'un de ses systèmes au cours du temps, sous forme d'une trajectoire. Selon une variante, une évolution est représentée sur une carte par une série de cercles de couleur variable positionnés dans les cellules de la carte dans lesquelles les séries de paramètres sont projetées, le diamètre des cercles allant en diminuant au fur et à mesure du temps, afin de permettre à un opérateur de visualiser immédiatement le sens d'évolution de l'état de fonctionnement.

De plus lors d'une étape 604, au moins un taux de dégradation attribué à ladite cellule cible est acquis pour ledit aéronef à surveiller ou pour un de ses systèmes.

Lors d'une étape 604-1 un diagnostic de dégradation peut être établi en fonction du label d'au moins une classe à laquelle appartient ladite cellule cible et en variante dudit au moins un taux de dégradation acquis pour ladite cellule cible.

Si la cellule cible appartient à une classe à laquelle a été attribué un label, la dégradation peut être caractérisée par le label de cette classe. En variante, le diagnostic peut également comporter le taux de dégradation de la cellule cible relatif à l'information de dégradation de la classe, ce taux exprimant une probabilité minimale que l'aéronef ou le système à surveiller présente une dégradation correspondant à l'information de dégradation. Si la cellule cible appartient à plusieurs classes ayant des labels différents, plusieurs diagnostics peuvent être établis. Les taux de dégradation de la cellule cible peuvent être stockés.

Si la cellule cible n'appartient pas à une classe à laquelle a été attribuée un label, aucun diagnostic n'est établi. Les taux de dégradation de la cellule peuvent toutefois être stockés.

Selon une variante, un diagnostic est établi à partir des informations de dégradation des cellules voisines de la cellule-cible si elles appartiennent à la même classe que la cellule-cible.

Lors d'une étape 604-2 un pronostic d'une défaillance de l'aéronef à surveiller ou d'un de ses systèmes peut être établi par le calculateur en fonction d'une évolution dudit au moins un taux de dégradation acquis au cours du temps.

Les taux de dégradation relatifs à différentes informations de dégradation des cellules cibles atteintes au cours des différents vols peuvent être stockés afin de pouvoir suivre leur évolution dans le temps.

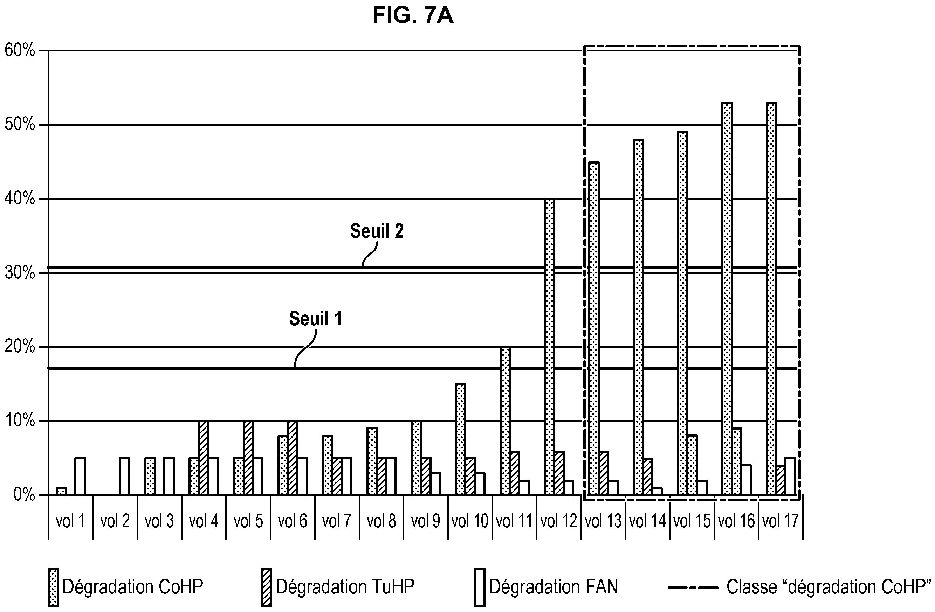

Dans un premier mode de réalisation illustré en figure 7A, différents seuils peuvent être fixés. Lorsqu'un taux de dégradation dépasse un de ces seuils, une alerte peut être générée.

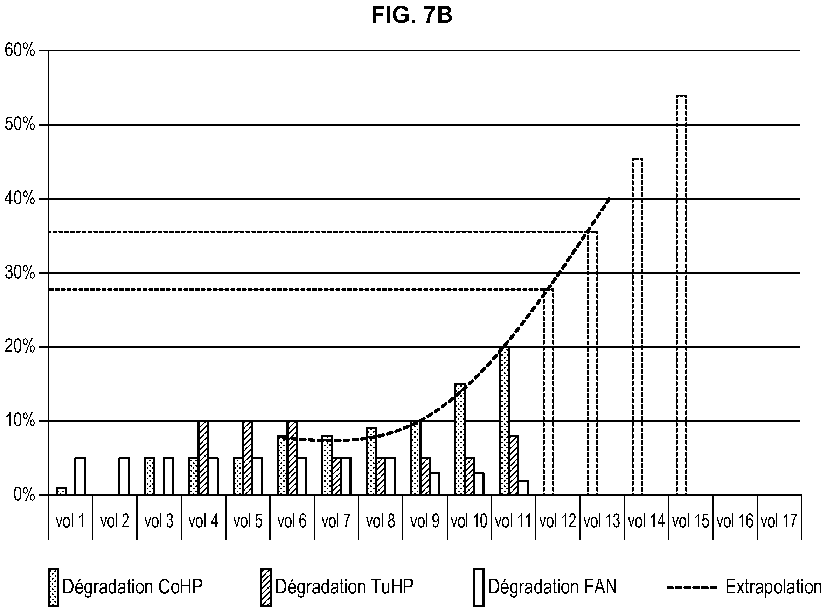

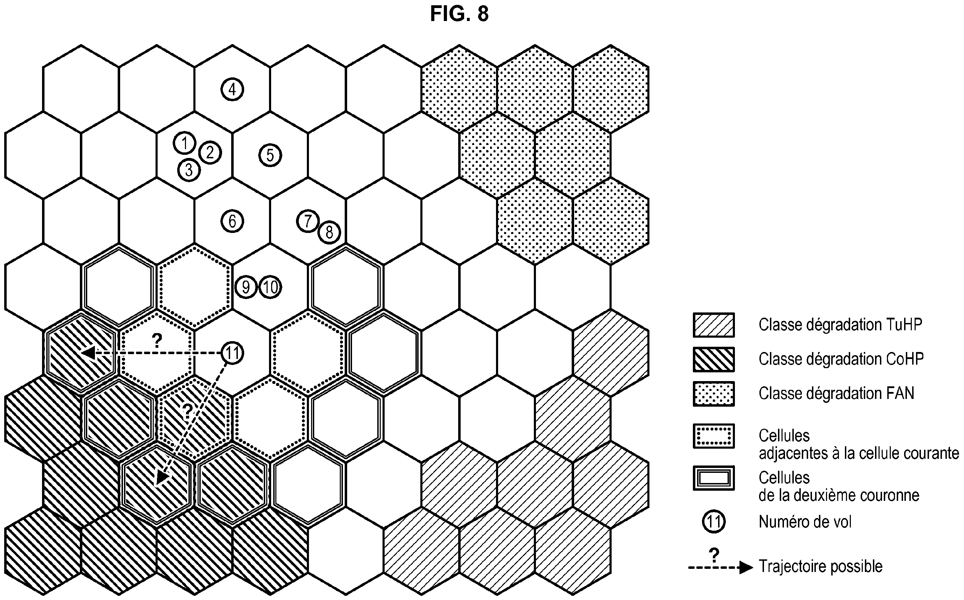

Dans un deuxième mode de réalisation illustré en figure 7B, une extrapolation sur un certain nombre de vols est réalisée à partir de l'évolution d'un taux de dégradation stocké pour déterminer un taux de dégradation futur estimé. Cette extrapolation peut être une régression linéaire ou d'ordre plus élevée. Elle peut être faite à titre d'exemple à partir des n derniers vols. Une telle extrapolation peut être réalisée pour chacun des taux de dégradation dont l'évolution dans le temps est suivie. Le taux de dégradation futur estimé est alors comparé aux taux de dégradation des différentes cellules de la carte. En variante illustré en figure 8, le taux de dégradation futur estimé est comparé aux taux des cellules adjacentes à la cellule cible ou aux taux des cellules des n premières couronnes entourant la cellule cible, par exemple aux taux des cellules de la deuxième couronne. Si une cellule adjacente ou des n premières couronnes, dite cellule cible future estimée, a un taux de dégradation semblable ou identique au taux de dégradation estimé, une alerte est générée. Cette alerte peut comprendre le délai restant avant que la dégradation n'altère le fonctionnement de l'aéronef. En variante les taux de dégradation de la cellule cible future estimée peuvent être acquis.

Dans une variante de ce deuxième mode de réalisation, une alerte n'est générée que si la cellule cible future estimée appartient à une classe.

Selon un autre mode de réalisation, la trajectoire de l'aéronef à surveiller ou d'un de ses systèmes peut être comparée avec des morceaux de trajectoires suivies dans le passé par d'autres aéronefs et stockés précédemment dans la base de données pour chercher des trajectoires similaires. Une analyse statistique de ces trajectoires et des classes de la carte traversées par celles-ci permettrait d'anticiper des opérations de maintenance sur l'aéronef à surveiller.

De plus, à l'issue du diagnostic, selon une cinquième étape 605, le calculateur peut mettre à jour la base de données des états de fonctionnement en y ajoutant la série de paramètres comprenant les paramètres caractérisant l'état de fonctionnement de l'aéronef à surveiller ou d'un de ses systèmes et l'information de dégradation indicative du niveau de dégradation déterminée lors de l'étape de diagnostic 604-1.

Selon une sixième étape 606, le calculateur peut mettre à jour la carte d'états de fonctionnement à partir des données mises à jour à la cinquième étape 605 afin d'augmenter la précision du diagnostic ou du pronostic.

En variante, seules les classes peuvent être redéfinies lors de cette mise à jour.

Cette étape de mise à jour peut être réalisée de manière régulière.

## Revendications

1. Procédé de surveillance du fonctionnement d'un aéronef (210),
à partir d'une carte d'états de fonctionnement d'aéronefs (101),
ladite carte d'états de fonctionnement étant réalisée à partir d'un fond de carte établi à partir d'une base de données d'états de fonctionnement d'une flotte d'aéronefs stockant des séries de paramètres (103),
chaque série de paramètres (103) comprenant des paramètres caractérisant un état de fonctionnement d'un desdits aéronefs et éventuellement au moins une information de dégradation (104) indicative d'un niveau de dégradation de l'aéronef,
ledit fond de carte comprenant un ensemble de cellules (105) chacune décrite par un vecteur-code proche d'une ou plusieurs séries de paramètres (103) stockées dans ladite base de données,
dans lequel un calculateur (207) exécute l'étape de :
- (602) déterminer une série de paramètres caractérisant un état de fonctionnement de l'aéronef à surveiller, à partir de données mesurées sur l'aéronef à surveiller,
**caractérisé en ce qu'**à au moins une desdites cellules étant attribuée au moins un taux de dégradation relatif à une information de dégradation, correspondant à la proportion des séries de paramètres comprenant ladite information de dégradation parmi les séries de paramètres proches du vecteur-code de ladite cellule, et
**en ce que** le calculateur (207) exécute les étapes de :
- (603) projeter la série de paramètres déterminés dans une cellule, dite cellule cible, de la carte d'états de fonctionnement d'aéronefs (101), et
- (604) acquérir ledit au moins un taux de dégradation attribué à ladite cellule cible.

2. Procédé selon la revendication 1, dans lequel les séries de paramètres (103) comprennent des paramètres obtenus à partir de mesures réalisées sur des aéronefs réels ayant un niveau de dégradation identifié.

3. Procédé selon l'une des revendications 1 ou 2, dans lequel les séries de paramètres (103) comprennent des paramètres obtenus à partir d'un modèle simulant un fonctionnement d'un aéronef ayant un niveau de dégradation prédéfini.

4. Procédé selon l'une des revendications 1 à 3, dans lequel chaque série de paramètres (103) comprend des paramètres déterminés à partir de mesures parmi une température de gaz d'échappement, un débit de carburant, une vitesse de rotation d'un arbre basse pression, une vitesse de rotation d'un arbre haute pression, et des températures et pressions en différents points d'un moteur de l'aéronef.

5. Procédé selon l'une des revendications 1 à 4, dans lequel chaque série de paramètres (103) comprend une information de dégradation (104) indiquant si l'état de fonctionnement est « normal » ou « dégradé ».

6. Procédé selon l'une des revendications 1 à 5, dans lequel chaque série de paramètres (103) comprend une information de dégradation (104) indiquant une localisation d'une dégradation dans l'aéronef.

7. Procédé selon l'une des revendications précédentes, dans lequel le fond de carte est établi à partir de la base de données d'états de fonctionnement selon la technique de cartographie auto-adaptative de Kohonen.

8. Procédé selon l'une des revendications précédentes, dans lequel ladite carte d'états de fonctionnement comprend en outre des classes de cellules regroupant des cellules de la carte, les classes étant définies en fonction d'une distance entre cellules et/ou des informations de dégradation comprises dans les séries de paramètres proches des vecteurs-code de cellules de la carte.

9. Procédé selon la revendication 8, dans lequel chaque classe regroupe un ensemble de cellules adjacentes, ledit ensemble de cellules étant l'intersection d'une union de classes candidates, créées en fonction des distances entre cellules, avec un ensemble de cellules adjacentes présentant chacune un taux de dégradation relatif à une même information de dégradation supérieur à un seuil déterminé.

10. Procédé selon l'une quelconque des revendications 8 ou 9, dans lequel un label est attribué (404) à une classe en fonction des informations de dégradation comprises dans les séries de paramètres proches des vecteurs-code des cellules de ladite classe.

11. Procédé selon la revendication 10, dans lequel un calculateur exécute l'étape de :
- (604-1) établir un diagnostic d'une dégradation de l'aéronef à surveiller en fonction du label d'au moins une classe à laquelle appartient ladite cellule cible.

12. Procédé selon la revendication 11, dans lequel un calculateur exécute en outre l'étape de :
- (604-1) établir ledit diagnostic d'une dégradation de l'aéronef à surveiller en fonction dudit au moins un taux de dégradation acquis pour ladite cellule cible.

13. Procédé selon l'une des revendications précédentes, dans lequel un calculateur exécute l'étape de :
- (604-2) établir un pronostic d'une défaillance de l'aéronef à surveiller en fonction d'une évolution dudit au moins un taux de dégradation acquis au cours du temps.

14. Procédé selon l'une des revendications 11 ou 12, dans lequel le calculateur exécute en outre l'étape de :
- (605) mettre à jour les données (209) enregistrées dans la base données en ajoutant une série de paramètres (103) comprenant les paramètres caractérisant l'état de fonctionnement de l'aéronef à surveiller et une information de dégradation (104) indicative de la dégradation diagnostiquée.

15. Procédé selon la revendication 14, dans lequel le calculateur exécute l'étape de :
- (606) élaborer à nouveau la carte d'états de fonctionnement (101) à partir des données (209) mises à jour.

16. Système de surveillance du fonctionnement d'un aéronef **caractérisé en ce qu'**il comprend un calculateur (207) programmé pour mettre en oeuvre les étapes du procédé selon l'une quelconque des revendications 1 à 15.

## Patentansprüche

1. Verfahren zur Überwachung des Betriebs eines Flugzeugs (210)
auf Grundlage einer Flugzeug-Betriebszuständekarte (101),
wobei die Betriebszuständekarte auf Grundlage eines Kartenhintergrunds ausgeführt wird, der auf Grundlage einer Datenbank von Betriebszuständen einer Flugzeugflotte erstellt wird, in der Parameterreihen (103) gespeichert sind,
wobei jede Parameterreihe (103) Parameter umfasst, die einen Betriebszustand eines der Flugzeuge charakterisieren, und gegebenenfalls mindestens eine Verschleißinformation (104), die ein Verschleißniveau des Flugzeugs angibt,
wobei der Kartenhintergrund einen Satz Zellen (105) umfasst, die jede von einem Codevektor beschrieben werden, der einer oder mehreren in der Datenbank gespeicherten Parameterreihen (103) naheliegt,
wobei ein Rechner (207) den Schritt ausführt des:
- (602) Bestimmens einer Parameterreihe, die einen Betriebszustand des zu überwachenden Flugzeugs charakterisiert, auf Grundlage von Daten, die an dem zu überwachenden Flugzeug gemessen wurden,
**dadurch gekennzeichnet, dass** mindestens einer der Zellen mindestens ein eine Verschleißinformation betreffender Verschleißgrad zugeordnet ist, der dem Anteil der Parameterreihen unter den dem Codevektor der Zelle naheliegenden Parameterreihen, die die Verschleißinformation enthalten, entspricht,
und dass der Rechner die Schritte ausführt des:
- (603) Projizieren der Reihe von Parametern, die bestimmt wurden, in eine Zelle der Flugzeug-Betriebszuständekarte (101), welche als Zielzelle bezeichnet wird, und
- (604) Erfassen des mindestens einen Verschleißgrades, der der Zielzelle zugeordnet ist.

2. Verfahren nach Anspruch 1, wobei die Parameterreihen (103) Parameter umfassen, die auf Grundlage von Messungen erhalten wurden, welche an echten Flugzeugen ausgeführt wurden, die ein identifiziertes Verschleißniveau aufweisen.

3. Verfahren nach einem der Ansprüche 1 oder 2, wobei die Parameterreihen (103) Parameter umfassen, die auf Grundlage eines Modells erhalten wurden, das einen Betrieb eines Flugzeugs simuliert, welches ein vordefiniertes Verschleißniveau aufweist.

4. Verfahren nach einem der Ansprüche 1 bis 3, wobei jede Parameterreihe (103) Parameter umfasst, die auf Grundlage von Messungen aus einer Abgastemperatur, einem Treibstoffdurchsatz, einer Drehzahl einer Niederdruckwelle, einer Drehzahl einer Hochdruckwelle, und den Temperaturen und Drücken an verschiedenen Punkten eines Motors des Flugzeugs bestimmt wurden.

5. Verfahren nach einem der Ansprüche 1 bis 4, wobei jede Parameterreihe (103) eine Verschleißinformation (104) umfasst, die angibt, ob der Betriebszustand "normal" oder "verschlissen" ist.

6. Verfahren nach einem der Ansprüche 1 bis 5, wobei jede Parameterreihe (103) eine Verschleißinformation (104) umfasst, die eine Stelle eines Verschleißes im Flugzeug angibt.

7. Verfahren nach einem der vorstehenden Ansprüche, wobei der Kartenhintergrund auf Grundlage der Betriebszustände-Datenbank gemäß der selbstorganisierenden Kartierungstechnik nach Kohonen erstellt wird.

8. Verfahren nach einem der vorstehenden Ansprüche, wobei die Betriebszuständekarte weiter Zellenklassen umfasst, die Zellen der Karte zusammenfassen, wobei die Klassen abhängig von einem Abstand zwischen Zellen und/oder den Verschleißinformationen definiert sind, die in den den Codevektoren von Zellen der Karte naheliegenden Parameterreihen umfasst sind.

9. Verfahren nach Anspruch 8, wobei jede Klasse einen Satz benachbarter Zellen zusammenfasst, wobei der Zellensatz die Schnittmenge einer Gemeinschaft von Kandidatenklassen, die in Abhängigkeit von den Abständen zwischen Zellen erzeugt wurden, mit einem Satz benachbarter Zellen ist, die jede einen ein und dieselbe Verschleißinformation betreffenden Verschleißgrad aufweisen, der über einer vorbestimmten Schwelle liegt.

10. Verfahren nach einem der Ansprüche 8 oder 9, wobei einer Klasse in Abhängigkeit von den Verschleißinformationen, die in den den Codevektoren der Zellen der Klasse naheliegenden Parameterreihen umfasst sind, ein Tag zugeordnet (404) wird.

11. Verfahren nach Anspruch 10, wobei ein Rechner den Schritt ausführt des:
- (604-1) Erstellens einer Diagnose eines Verschleißes des zu überwachenden Flugzeugs in Abhängigkeit von dem Tag mindestens einer Klasse, zu der die Zielzelle gehört.

12. Verfahren nach Anspruch 11, wobei ein Rechner weiter den Schritt ausführt des:
- (604-1) Erstellens der Diagnose eines Verschleißes des zu überwachenden Flugzeugs in Abhängigkeit von dem mindestens einen Verschleißgrad, der für die Zielzelle erfasst wurde.

13. Verfahren nach einem der vorstehenden Ansprüche, wobei ein Rechner den Schritt ausführt des:
- (604-2) Erstellens einer Prognose eines Ausfalls des zu überwachenden Flugzeugs in Abhängigkeit von einer Entwicklung des mindestens einen Verschleißgrades, der über die Zeit hinweg erfasst wurde.

14. Verfahren nach einem der Ansprüche 11 oder 12, wobei der Rechner weiter den Schritt ausführt des:
- (605) Aktualisierens der in der Datenbank gespeicherten Daten (209) durch Hinzufügen einer Parameterreihe (103), die die Parameter umfasst, welche den Betriebszustand des zu überwachenden Flugzeugs charakterisieren, und einer Verschleißinformation (104), die den diagnostizierten Verschleiß angibt.

15. Verfahren nach Anspruch 14, wobei der Rechner den Schritt ausführt des:
- (606) erneuten Erarbeitens der Betriebszuständekarte (101) auf Grundlage der aktualisierten Daten (209).

16. System zur Überwachung des Betriebs eines Flugzeugs, **dadurch gekennzeichnet, dass** es einen Rechner (207) umfasst, der dafür programmiert ist, die Schritte des Verfahrens nach einem der Ansprüche 1 bis 15 umzusetzen.

## Claims

1. A method for monitoring the operation of an aircraft (210), from a map of operating states of aircraft (101), said map of operating states being created from a map background established from a database of operating states of a fleet of aircraft storing series of parameters (103),
each series of parameters (103) comprising parameters characterizing an operating state of one of said aircraft and possibly at least one item of degradation information (104) indicative of a degradation level of the aircraft,
said map background comprising a set of cells (105) each described by a code vector close to one or several series of parameters (103) stored in said database,
wherein a computer (207) performs the step of:
- (602) determining a series of parameters characterizing an operating state of the aircraft to be monitored, from data measured on the aircraft to be monitored,
**characterized in that** to at least one of said cells is assigned at least one degradation level relating to an item of degradation information, corresponding to the proportion of the series of parameters comprising said item of degradation information from among the series of parameters close to the code vector of said cell,
and **in that** the computer performs the following steps:
- (603) projecting the series of determined parameters in a cell, a so-called target cell, of the map of operating states of aircraft (101), and
- (604) acquiring said at least one degradation level assigned to said target cell.

2. The method according to claim 1, wherein the series of parameters (103) comprise parameters obtained from measurements conducted on actual aircraft having an identified degradation level.

3. The method according to one of claims 1 or 2, wherein the series of parameters (103) comprise parameters obtained from a model simulating operation of an aircraft having a predefined degradation level.

4. The method according to one of claims 1 to 3, wherein each series of parameters (103) comprises parameters determined from measurements, from among a temperature of exhaust gases, a fuel flow rate, a speed of rotation of a low pressure shaft, a speed of rotation of a high pressure shaft, and temperatures and pressures in different points of an engine of the aircraft.

5. The method according to one of claims 1 to 4, wherein each series of parameters (103) comprises an item of degradation information (104) indicating whether the operating state is "normal" or "degraded".

6. The method according to one of claims 1 to 5, wherein each series of parameters (103) comprises an item of degradation information (104) indicating localization of a degradation in the aircraft.

7. The method according to one of the previous claims, wherein the map background is established from the database of operating states according to the Kohonen self-adaptive mapping technique.

8. The method according to one of the previous claims, wherein said map of operating states further comprises classes of cells grouping together the cells of the map, the classes being defined according to a distance between cells and/or degradation information comprised in the series of parameters close to the code vectors of cells from the map.

9. The method according to claim 8, wherein each class groups together a set of adjacent cells, said set of cells being the intersection of a union of candidate classes, created according to intercellular distances, with a set of adjacent cells each having a degradation level relative to the same item of degradation information greater than a determined threshold.

10. The method according to any one of claims 8 or 9, wherein a label is assigned (404) to a class according to degradation information comprised in the series of parameters close to the code vectors of the cells of said class.

11. The method according to claim 10, wherein a computer performs the step of:
- (604-1) establishing a diagnostic of a degradation of the aircraft to be monitored according to the label of at least one class to which belongs said target cell.

12. The method according to claim 11, wherein a computer further performs the step of:
- (604-1) establishing said diagnostic of a degradation of the aircraft to be monitored according to said at least one degradation level acquired for said target cell.

13. The method according to one of the previous claims, wherein a computer performs the step of:
- (604-2) establishing a forecast of a failure of the aircraft to be monitored according to a change of said at least one degradation level acquired over time.

14. The method according to one of claims 11 or 12, wherein the computer further performs the step of:
- (605) updating the data (209) recorded in the database by adding a series of parameters (103) comprising the parameters characterizing the operating state of the aircraft to be monitored and an item of degradation information (104) indicative of the diagnosed degradation.

15. The method according to claim 14, wherein the computer performs the step of:
- (606) again formulating the map of operating states (101) from updated data (209).

16. A system for monitoring the operation of an aircraft **characterized in that** it comprises a computer (207) programmed for applying the steps of the method according to any one of claims 1 to 15.
